(19) Europäisches Patentamt / European Patent Office / Office européen des brevets

(11) **EP 3 995 800 B1**

(12) **FASCICULE DE BREVET EUROPEEN**

(45) Date de publication et mention de la délivrance du brevet:
**30.11.2022  Bulletin 2022/48**

(21) Numéro de dépôt: **21206282.2**

(22) Date de dépôt: **03.11.2021**

(51) Classification Internationale des Brevets (IPC):
**G01K 11/24** $^{(2006.01)}$    **G01F 1/66** $^{(2022.01)}$
**G01F 15/02** $^{(2006.01)}$    **G01K 13/02** $^{(2021.01)}$

(52) Classification Coopérative des Brevets (CPC):
**G01K 11/24; G01F 1/668; G01F 15/022; G01K 13/02; G01K 13/026**

(54) **PROCÉDÉ DE MESURE DE LA TEMPÈRATURE DE L'EAU DANS UN COMPTEUR**

VERFAHREN ZUR MESSUNG DER WASSERTEMPERATUR IN EINEM ZÄHLER

METHOD FOR MEASURING THE TEMPERATURE OF WATER IN A METER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **09.11.2020  FR 2011499**

(43) Date de publication de la demande:
**11.05.2022  Bulletin 2022/19**

(73) Titulaire: **Sagemcom Energy & Telecom SAS
92500 Rueil-Malmaison (FR)**

(72) Inventeurs:
• **SABRAOUI, Abbas
92500 RUEIL MALMAISON (FR)**
• **TEBOULLE, Henri
92500 RUEIL MALMAISON (FR)**
• **ABID, Oussama
92500 RUEIL MALMAISON (FR)**
• **LECOCQ, Guillaume
92500 RUEIL MALMAISON (FR)**

(74) Mandataire: **Lavaud, Thomas et al
Cabinet Boettcher
16, rue Médéric
75017 Paris (FR)**

(56) Documents cités:
**WO-A1-2019/002145    WO-A1-2020/100157
US-A1- 2003 029 242**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne le domaine des compteurs qui mesurent une consommation d'eau, et notamment des compteurs d'eau chaude et des compteurs d'énergie thermique.

ARRIERE PLAN DE L'INVENTION

Un compteur d'eau ultrasonique comporte classiquement un conduit dans lequel circule l'eau, ainsi que deux transducteurs piézoélectriques comprenant un transducteur amont et un transducteur aval. Les transducteurs sont positionnés aux extrémités d'un trajet qui est défini dans le conduit et dont la longueur est connue précisément. Le transducteur amont émet un signal ultrasonore de mesure qui parcourt le trajet d'amont en aval et qui est reçu par le transducteur aval. Le transducteur aval émet un signal ultrasonore de mesure qui parcourt le trajet d'aval en amont et qui est reçu par le transducteur amont. La vitesse moyenne de l'eau est estimée à partir de la différence entre les temps de vol, et le débit de l'eau est calculé à partir de la vitesse moyenne de l'eau.

Il est avantageux de pouvoir mesurer la température de l'eau dans le compteur, en particulier dans le cas des compteurs d'eau chaude et des compteurs d'énergie thermique (CET) qui peuvent traiter des températures de l'eau allant jusqu'à 130°C.

Les distributeurs d'eau et les clients souhaitent en effet avoir accès à cette information. Lorsqu'elle est disponible, la mesure de la température de l'eau est affichée sur l'écran LCD du compteur et est transmise par une liaison radio au distributeur d'eau.

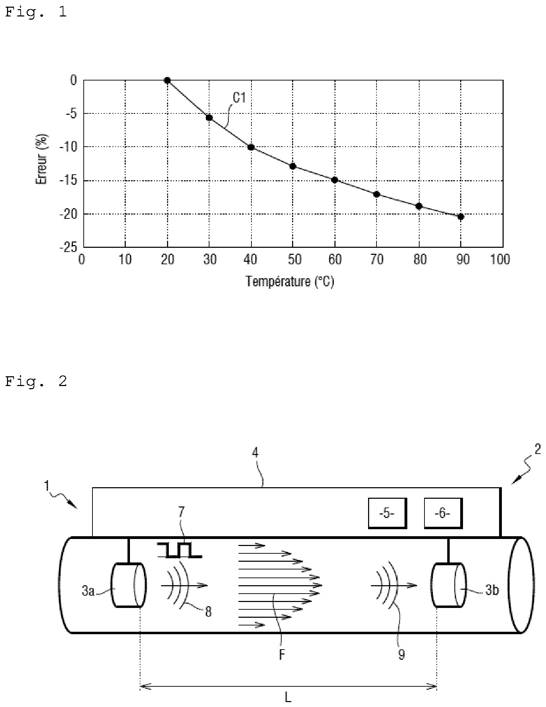

On sait par ailleurs, en référence à la figure 1, que, pour un débit d'eau donné, par exemple égal à 6 litres/heure, l'erreur métrologique sur le débit (courbe Cl) dépend de la température de l'eau. Il est donc important de connaître précisément la température de l'eau pour pouvoir appliquer la bonne correction sur le débit et garantir des performances conformes à la norme OIML R-49 qui requiert une précision de mesure à $\pm$ 5%.

Il est donc relativement classique d'intégrer une sonde de température dans un compteur d'eau chaude ou d'énergie thermique.

On retrouve des exemples dans les documents: WO 2019/002145 A1, WO 2020/100157 A1, US 2003/029242 A1.

On note que, dans le cas de la mesure d'énergie thermique, deux sondes de température sont généralement utilisées dans l'installation du client : une sonde en entrée de l'installation (positionnée dans le compteur), et une sonde en sortie de l'installation.

La présence de la sonde dans le compteur augmente bien sûr le coût du compteur et tend à réduire sa fiabilité.

OBJET DE L'INVENTION

L'invention a pour objet de réduire le coût et d'augmenter la fiabilité d'un compteur d'eau, sans pour autant réduire la précision des mesures qu'il réalise.

RESUME DE L'INVENTION

En vue de la réalisation de ce but, on propose un procédé de mesure de la température de l'eau, mis en œuvre au moins partiellement dans un compteur et comprenant les étapes de :

-   faire émettre par un transducteur émetteur du compteur un signal ultrasonore de mesure, puis acquérir un signal électrique de mesure produit par un transducteur récepteur du compteur lorsque celui-ci reçoit le signal ultrasonore de mesure après que le signal ultrasonore de mesure a parcouru un trajet de longueur définie dans l'eau ;
-   mesurer une vitesse du signal ultrasonore de mesure dans l'eau ;
-   mesurer un niveau du signal électrique de mesure ;
-   déterminer à partir du niveau du signal électrique de mesure si une température de l'eau est inférieure ou supérieure à une température d'inflexion correspondant à un point d'inflexion d'une courbe de la vitesse du son dans l'eau en fonction de la température de l'eau ;
-   estimer la température de l'eau à partir de la vitesse du signal ultrasonore de mesure en utilisant une première formule si la température de l'eau est inférieure à la température d'inflexion, ou une deuxième formule si la température de l'eau est supérieure à la température d'inflexion.

Le procédé de mesure selon l'invention permet donc d'estimer la température de l'eau à partir de la vitesse du signal ultrasonore de mesure.

Cependant, la courbe de la vitesse du son dans l'eau en fonction de la température de l'eau présente un point d'inflexion à une température d'inflexion, de sorte que deux températures de l'eau peuvent correspondre à une même vitesse du son.

Or, le niveau du signal électrique de mesure reçu par le transducteur récepteur varie de manière presque linéaire en fonction de la température de l'eau. Le niveau du signal électrique de mesure est donc utilisé pour déterminer si la température de l'eau se situe avant ou après le point d'inflexion, ce qui permet de choisir la « bonne » formule pour estimer précisément la « bonne » température qui correspond à la vitesse mesurée du signal ultrasonore de mesure. La température de l'eau est donc mesurée de manière très précise y compris pour des températures allant au-delà de la température d'inflexion.

La mesure de la température de l'eau peut ainsi être utilisée pour corriger le débit d'eau de sorte que les mesures de débit sont très précises même en l'absence d'une sonde de température dans le compteur.

Dans le cas d'un compteur d'eau chaude, il n'est donc plus nécessaire de munir ledit compteur d'une sonde de température.

Dans le cas de la mesure d'énergie thermique, la sonde du compteur peut être supprimée et la mesure ne nécessite plus qu'une sonde (positionnée en sortie de l'installation).

Le compteur est donc moins coûteux et plus fiable.

On propose de plus un procédé de mesure tel que précédemment décrit, comprenant l'étape, pour déterminer si la température de l'eau est inférieure ou supérieure à la température d'inflexion, de comparer le niveau du signal électrique de mesure avec un seuil prédéfini égal à un premier niveau de référence du signal électrique de mesure multiplié par un facteur de référence, le premier niveau de référence ayant été préalablement mesuré au cours d'une phase de calibration du compteur alors que la température de l'eau est égale à une première température de référence, et le facteur de référence correspondant à une évolution attendue du niveau du signal électrique de mesure résultant de la différence de température entre la première température de référence et la température d'inflexion.

On propose de plus un procédé de mesure tel que précédemment décrit, dans lequel le facteur de référence a été calculé préalablement à une mise en service du compteur à partir d'au moins un deuxième niveau de référence du signal électrique de mesure mesuré alors que la température de l'eau est égale à une deuxième température de référence et un troisième niveau de référence du signal électrique de mesure mesuré alors que la température de l'eau est égale à une troisième température de référence.

On propose de plus un procédé de mesure tel que précédemment décrit, dans lequel le deuxième niveau de référence et le troisième niveau de référence ont été mesurés au cours de la phase de calibration dudit compteur, le facteur de référence étant alors propre audit compteur.

On propose de plus un procédé de mesure tel que précédemment décrit, dans lequel le deuxième niveau de référence et le troisième niveau de référence ont été mesurés pour une pluralité d'autres compteurs similaires audit compteur, le facteur de référence étant alors commun à plusieurs compteurs.

On propose de plus un procédé de mesure tel que précédemment décrit, comprenant en outre les étapes d'estimer un débit de l'eau en utilisant la vitesse du signal ultrasonore de mesure, et de corriger le débit de l'eau en utilisant la température de l'eau estimée par le procédé de mesure.

On propose de plus un procédé de mesure tel que précédemment décrit, dans lequel la première formule et la deuxième formule résultent respectivement d'une première équation et d'une deuxième équation de la vitesse du son dans l'eau en fonction de la température de l'eau, la première équation et la deuxième équation étant des équations du second degré.

On propose de plus un procédé de mesure tel que précédemment décrit, dans lequel la première équation est :

$$\text{Vs} = -0{,}0325.\text{T}^2 + 4{,}4218.\text{T} + 1403{,}9$$

et la deuxième équation est :

$$\text{Vs} = -0{,}0101.\text{T}^2 + 1{,}226.\text{T} + 1518{,}8,$$

où Vs est la vitesse du son dans l'eau et où T est la température de l'eau.

On propose de plus un procédé de mesure tel que précédemment décrit, dans lequel le niveau du signal électrique de mesure est égal à une moyenne d'amplitudes d'une pluralité de lobes, lesdits lobes étant situés au milieu d'une portion du signal électrique de mesure dans laquelle ledit signal électrique de mesure présente une amplitude sensiblement constante.

On propose de plus un procédé de mesure tel que précédemment décrit, dans lequel la température d'inflexion est comprise dans l'intervalle 74°C ± 2°C.

On propose aussi un compteur comprenant au moins un transducteur et un composant de traitement agencé pour mettre en œuvre le procédé de mesure tel que précédemment décrit.

On propose aussi un compteur tel que précédemment décrit, le compteur étant un compteur d'eau.

On propose aussi un compteur tel que précédemment décrit, le compteur étant un compteur d'énergie thermique.

On propose en outre un programme d'ordinateur comprenant des instructions qui conduisent le composant de traitement du compteur tel que précédemment décrit à exécuter les étapes du procédé de mesure tel que précédemment décrit.

On propose en outre un support d'enregistrement lisible par ordinateur, sur lequel est enregistré le programme d'ordinateur tel que précédemment décrit.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés parmi lesquels :

[Fig. 1] la figure 1 représente un graphique comprenant une courbe de l'erreur métrologique sur la mesure du débit de l'eau en fonction de la température de l'eau, pour un débit de 6 litres/heure ;

[Fig. 2] la figure 2 représente un dispositif de mesure ultrasonique d'un compteur d'eau dans lequel est mise en œuvre l'invention ;

[Fig. 3] la figure 3 représente un graphique comprenant une courbe de la variation de la vitesse du son dans l'eau en fonction de la température ;

[Fig. 4] la figure 4 représente un graphique comprenant une courbe d'une fonction quadratique qui approche la courbe de la figure 3 avant le point d'inflexion de 74°C ;

[Fig. 5] la figure 5 représente un graphique comprenant une courbe d'une fonction quadratique qui approche la courbe de la figure 3 après le point d'inflexion de 74°C ;

[Fig. 6] la figure 6 représente un graphique comprenant une courbe du signal électrique de mesure ;

[Fig. 7] la figure 7 représente un graphique comprenant une courbe du niveau attendu du signal électrique de mesure en fonction de la température de l'eau ;

[Fig. 8] la figure 8 représente des étapes du procédé de mesure selon l'invention.

DESCRIPTION DETAILLEE DE L'INVENTION

En référence à la figure 2, l'invention est ici mise en œuvre dans un compteur d'eau chaude 1 qui est utilisé pour mesurer la consommation d'eau chaude fournie par un réseau de distribution à l'installation d'un client.

Le compteur 1 comporte tout d'abord un module de communication qui permet au compteur 1 de communiquer avec un Système d'Information (SI) du gestionnaire du réseau, éventuellement via un concentrateur de données, une passerelle, ou bien un autre compteur (tel qu'un compteur d'eau communicant de quartier). Le module de communication est susceptible de mettre en œuvre tout type de communication, et par exemple une communication via un réseau cellulaire de type 2G, 3G, 4G, Cat-M ou NB-IOT, une communication selon le protocole LoRa, une communication radio selon le standard *Wize* opérant à la fréquence de 169MHz, etc. Le compteur 1 transmet au SI via le module de communication, à intervalles réguliers, les mesures réalisées.

Le compteur 1 comporte de plus un conduit dans lequel circule l'eau fournie par le réseau de distribution à l'installation du client, ainsi qu'un dispositif de mesure ultrasonique 2.

L'eau circule dans le conduit d'amont en aval, comme cela est indiqué par le sens des flèches F.

Le dispositif de mesure ultrasonique 2 comporte un transducteur amont 3a et un transducteur aval 3b. Le transducteur amont 3a et le transducteur aval 3b sont appairés. Le transducteur amont 3a et le transducteur aval 3b sont ici des transducteurs piézoélectriques.

Le dispositif de mesure ultrasonique 2 comporte aussi un module de mesure 4 relié au transducteur amont 3a et au transducteur aval 3b.

Le module de mesure 4 comporte un module de traitement comprenant un composant de traitement 5 qui est adapté à exécuter des instructions d'un programme pour mettre en œuvre le procédé de mesure selon l'invention. Le programme est stocké dans une mémoire reliée ou intégrée dans le composant de traitement 5. Le composant de traitement 5 est par exemple un processeur, un DSP (pour *Digital Signal Processor,* que l'on peut traduire par « processeur de signal numérique »), un microcontrôleur, ou bien un circuit logique programmable tel qu'un FPGA (pour *Field Programmable Gate Arrays*) ou un ASIC (pour *Application Specific Integrated Circuit*).

Le module de mesure 4 comporte de plus un convertisseur analogique-numérique 6 (éventuellement intégré dans le composant de traitement 5).

Le composant de traitement 5 pilote le transducteur amont 3a et le transducteur aval 3b.

Le transducteur amont 3a et le transducteur aval 3b remplissent chacun successivement la fonction d'un transducteur émetteur et d'un transducteur récepteur.

Sur la figure 2, on a représenté le transducteur amont 3a remplissant la fonction de transducteur émetteur et le transducteur aval 3b remplissant la fonction de transducteur récepteur.

Le composant de traitement 5 génère un signal électrique d'excitation 7, et fournit au transducteur émetteur le signal électrique d'excitation 7. Le composant de traitement 5 fait ainsi émettre par le transducteur émetteur un signal ultrasonore de mesure 8. Le transducteur récepteur reçoit le signal ultrasonore de mesure 9 après que le signal ultrasonore de mesure 8 a parcouru dans l'eau un trajet de longueur définie L.

Le trajet de longueur définie L est ici un trajet rectiligne entre le transducteur amont 3a et le transducteur aval 3b. La longueur définie L est typiquement égale à 7cm. On note que la distance L est mesurée précisément au cours d'une phase de calibration réalisée en usine préalablement à la mise en service du compteur 1.

Le signal électrique d'excitation 7 est ici un signal rectangulaire qui a pour fréquence $f_{us}$ et pour période $T_{us}$. La fréquence $f_{us}$ est classiquement comprise entre 900kHz et 4MHz, et est ici égale à 1MHz.

Lorsque le transducteur émetteur est le transducteur amont 3a, le signal ultrasonore de mesure 8 parcourt ainsi, entre le transducteur amont 3a et le transducteur aval 3b, le trajet de longueur définie L d'amont en aval.

Lorsque le transducteur émetteur est le transducteur aval 3b, le signal ultrasonore de mesure parcourt, entre le transducteur aval 3b et le transducteur amont 3a, le trajet de longueur définie L d'aval en amont.

Le signal ultrasonore de mesure 8 est émis par le transducteur émetteur (transducteur amont 3a sur la figure 2) avec un niveau $N_E$. Le signal ultrasonore de mesure 9 est reçu par le transducteur récepteur (transducteur aval 3b sur la figure 2) avec un niveau $N_R$ inférieur au niveau $N_E$.

Le convertisseur analogique-numérique 6 du module de mesure 4 numérise le signal électrique de mesure produit par le transducteur récepteur lorsque celui-ci reçoit le signal ultrasonore de mesure 9, et produit des échantillons de mesure. Pour un signal de fréquence $f_{us}$ = 1MHz, la fréquence d'échantillonnage est typiquement de 4MHz afin de respecter le critère de *Shannon.* Le composant de traitement 5 acquiert le signal électrique de mesure numérisé.

Lorsque le transducteur émetteur est le transducteur amont 3a, le composant de traitement 5 mesure à partir du signal électrique de mesure le temps de trajet mis par le signal ultrasonore de mesure 8 pour parcourir le trajet de longueur définie d'amont en aval.

Le composant de traitement 5 mesure en réalité un temps de transfert global $T_{AB}$ du transducteur amont 3a vers le transducteur aval 3b.

Le temps de transfert global $T_{AB}$ est tel que :

$T_{AB}=TA_A+ToF_{AB}+TR_B$, où :

- $TA_A$ est un temps d'allumage du transducteur amont 3a ;
- $ToF_{AB}$ correspond au temps de vol (Time of Flight, en anglais) mis par le signal ultrasonore de mesure 8 pour parcourir le trajet de longueur définie entre le transducteur amont 3a et le transducteur aval 3b ;
- $TR_B$ est un temps de réception du transducteur aval 3b.

De même, lorsque le transducteur émetteur est le transducteur aval 3b, le composant de traitement 5 mesure le temps de transfert global $T_{BA}$ qui est tel que :

$T_{BA}=TA_B+ToF_{BA}+TR_A$, où :

- $TA_B$ est un temps d'allumage du transducteur aval 3b ;
- $ToF_{BA}$ correspond au temps de vol mis par le signal ultrasonore de mesure pour parcourir le trajet de longueur définie entre le transducteur aval 3b et le transducteur amont 3a ;
- $TR_A$ est un temps de réception du transducteur amont 3a.

En supposant que :

$TA_A=TA_B$ et $TR_A=TR_B$ (transducteurs appairés), on obtient :

$$\Delta T = T_{BA} - T_{AB} = ToF_{BA} - ToF_{AB} = DToF,$$

où DToF est le temps de vol différentiel (*Differential Time of Flight).*

Or, le DToF est proportionnel à la vitesse moyenne de l'eau, et le composant de traitement 5 calcule alors la vitesse moyenne de l'eau en utilisant le DToF. La vitesse moyenne est signée et peut être positive, négative ou nulle.

Le composant de traitement 5 déduit alors de la vitesse moyenne de l'eau le débit d'eau circulant dans le conduit du compteur 1.

Le signal électrique de mesure est donc utilisé pour produire une mesure du débit de l'eau. Mais, comme on le verra plus bas, le signal électrique de mesure est aussi utilisé, dans le procédé de mesure selon l'invention, pour déterminer si la température de l'eau est inférieure ou supérieure à une température d'inflexion. La température d'inflexion correspond à un point d'inflexion d'une courbe de la vitesse du son dans l'eau en fonction de la température de l'eau.

La température d'inflexion est ici égale à 74°C.

Dans le procédé de mesure selon l'invention, la température de l'eau est estimée à partir d'une mesure de la vitesse du signal ultrasonore de mesure dans l'eau.

Pour estimer la vitesse de l'eau, le composant de traitement 5 va donc tout d'abord mesurer la vitesse du signal ultrasonore de mesure dans l'eau, c'est-à-dire la vitesse du son dans l'eau.

La somme des temps de vol est proportionnelle à la distance L entre le transducteur amont 3a et le transducteur aval 3b, et inversement proportionnelle à la vitesse du son dans l'eau.

Le composant de traitement 5 déduit donc de la somme des temps de vol la vitesse du son dans l'eau.

Le composant de traitement 5 estime alors la température de l'eau à partir la vitesse du son dans l'eau.

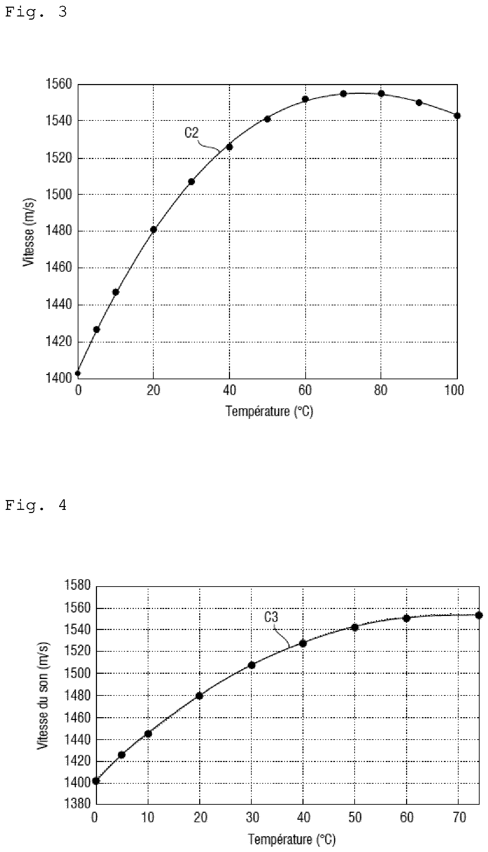

La courbe C2 de la figure 3 représente la variation de la vitesse du son dans l'eau en fonction de la température de l'eau qui varie sur le graphique entre 0.1°C et 100°C. Comme on l'a évoqué plus tôt, cette courbe C2 présente un point d'inflexion aux alentours de 74°C : la courbe est croissante jusqu'à 74°C et décroissante à partir de 74°C. Du fait de ce point d'inflexion, deux valeurs différentes de température de l'eau peuvent correspondre à une même vitesse du son dans l'eau. Ainsi, par exemple, pour une même vitesse du son dans l'eau de 1542m/s, la température de l'eau peut être soit égale à 50°C, soit égale à 100°C.

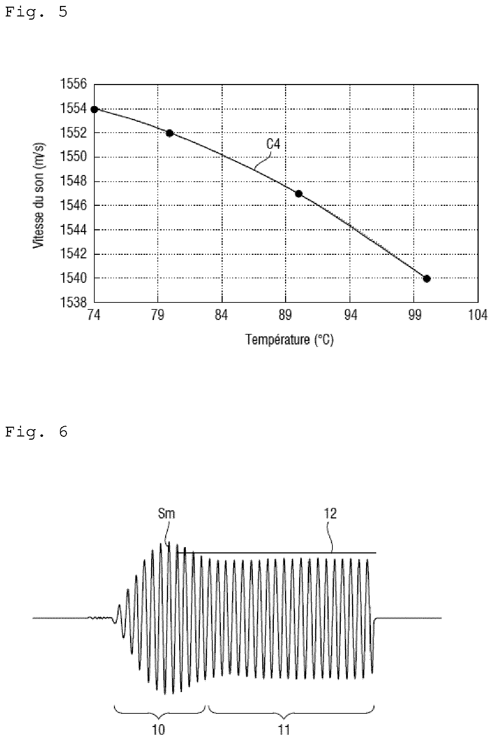

La courbe C2 peut être approchée par deux courbes de fonctions quadratiques. La courbe C3, visible sur la figure 4, correspond aux températures de l'eau inférieures à 74°C. La courbe C4, visible sur la figure 5, correspond aux températures de l'eau supérieures à 74°C.

La courbe C3 est définie entre 0°C et 74°C par la première équation suivante :

$$\mathtt{Vs = -0,0325.T^2 + 4,4218.T + 1403,9,}$$

où Vs est la vitesse du son dans l'eau et où T est la température de l'eau.

La courbe C4 est définie entre 74°C et 100°C par la deuxième équation suivante :

$$\mathtt{Vs = -0,0101.T^2 + 1,226.T + 1518,8.}$$

Pour déterminer l'équation qui doit être utilisée pour trouver la « bonne » température qui correspond à la vitesse du son dans l'eau qui a été estimée, et lever ainsi l'incertitude liée au fait que deux températures distinctes (l'une au-dessous de 74°C, l'autre au-dessus) peuvent correspondre exactement à la même vitesse du son, le composant de traitement 5 mesure un niveau du signal électrique de mesure, puis détermine, à partir du niveau du signal électrique de mesure, si la température de l'eau est inférieure ou supérieure à 74°C.

Le niveau du signal électrique de mesure permet en effet de produire une estimation peu précise de la température de l'eau mais suffisante pour déterminer si la température de l'eau est inférieure ou supérieure à 74°C, et donc si la première équation ou la deuxième équation doit être utilisée pour estimer précisément la température de l'eau.

La figure 6 représente le signal électrique de mesure Sm. Le signal électrique de mesure Sm comprend une première portion 10 et une deuxième portion 11. Dans la première portion 10, l'amplitude du signal électrique de mesure Sm croît de manière importante puis décroît. Dans la deuxième portion 11, l'amplitude du signal électrique de mesure Sm est relativement constante.

L'amplitude du signal électrique de mesure Sm est ici plus importante dans la première portion 10, ce qui est dû au fait que la fréquence d'excitation du transducteur émetteur ne correspond pas exactement à sa fréquence de résonance. Bien sûr, il aurait été possible de choisir une fréquence d'excitation égale à la fréquence de résonance du transducteur émetteur.

Le niveau du signal électrique de mesure Sm utilisé est ici le niveau du « plateau » 12 de la deuxième portion 11 du signal électrique de mesure Sm. Plus précisément, le niveau du signal électrique de mesure Sm est ici égal à une moyenne des amplitudes d'une pluralité de lobes (par exemple de dix lobes), lesdits lobes étant situés au milieu d'une portion du signal électrique de mesure Sm dans laquelle ledit signal électrique de mesure Sm présente une amplitude sensiblement constante (c'est-à-dire au milieu de la deuxième portion 11).

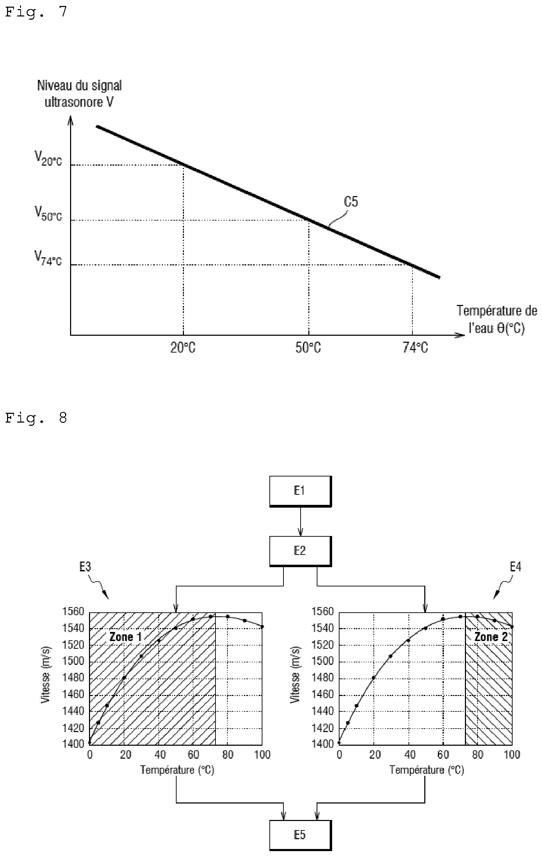

Il a été constaté que le niveau du signal électrique de mesure diminue de manière linéaire lorsque la température augmente. La courbe linéaire C5, visible sur la figure 7, représente, pour le compteur 1, le niveau attendu du signal électrique de mesure en fonction de la température de l'eau.

Pour déterminer si la température de l'eau est inférieure ou supérieure à 74°C, le composant de traitement 5 compare le niveau du signal électrique de mesure avec le niveau qui serait attendu pour une température de l'eau égale à 74°C. Le niveau attendu pour une température de 74°C est déterminé grâce à la connaissance d'un premier niveau de référence du signal électrique de mesure préalablement mesuré au cours d'une phase de calibration du compteur 1 alors que la température de l'eau est égale à une première température de référence, et grâce à un facteur de référence. Le facteur de référence est un pourcentage correspondant à l'évolution attendue du niveau du signal électrique de mesure résultant de la différence de température entre la première température de référence et 74°C.

Le composant de traitement 5 compare le niveau du signal électrique de mesure Sm avec un seuil prédéfini égal au premier niveau de référence du signal électrique de mesure multiplié par le facteur de référence.

La première température de référence est par exemple égale à 20°C.

Le facteur de référence a été calculé préalablement à une mise en service du compteur à partir d'au moins un deuxième niveau de référence du signal électrique de mesure mesuré alors que la température de l'eau est égale à une deuxième température de référence et un troisième niveau de référence du signal électrique de mesure mesuré alors que la température de l'eau est égale à une troisième température de référence.

Le deuxième niveau de référence, le troisième niveau de référence et le facteur de référence peuvent avoir été mesurés au cours de la phase de calibration du compteur 1. Ainsi, au cours de ladite phase de calibration, le niveau du signal électrique de mesure est mesuré dans le compteur 1 pour une température de l'eau égale à la deuxième température de référence pour obtenir le deuxième niveau de référence, puis le niveau du signal électrique de mesure est mesuré dans le compteur 1 pour une température de l'eau égale à la troisième température de référence pour obtenir le troisième niveau de référence. Le facteur de référence obtenu est propre au compteur 1. Bien sûr, dans ce cas, il est avantageux que la deuxième température de référence (ou bien la troisième température de référence) soit égale à la première température de référence, et donc que le deuxième niveau de référence (ou bien le troisième niveau de référence) soit le premier niveau de référence, car deux points de mesure sont alors suffisants pour définir le facteur de référence et le premier niveau de référence utilisés en opération.

La deuxième température de référence est par exemple égale à 20°C et la troisième température de référence est par exemple égale à 50°C.

Alternativement, la courbe linéaire C5 peut être obtenue grâce à des mesures réalisées sur un grand nombre de compteurs similaires au compteur 1. Les compteurs « similaires » sont par exemple des compteurs ayant le même numéro d'article (même P/N, pour *Part Number*) que le compteur 1. Le « grand nombre » de compteurs est tel qu'il permet de définir une courbe linéaire représentative du niveau attendu du signal électrique de mesure, qui est pertinente pour tous les compteurs similaires au compteur 1. Dans ce cas, le deuxième niveau de référence et le troisième niveau de référence sont mesurés pour une pluralité d'autres compteurs similaires audit compteur 1, et le facteur de référence utilisé est commun à plusieurs compteurs.

On a alors par exemple pour le compteur 1 :

$$\mathrm{N(74°C) \;=\; 0,7.N(20°C),}$$

où N(74°C) est le niveau attendu du signal électrique de mesure pour une température de l'eau égale à 74°C, N(20°C) est le premier niveau de référence (c'est-à-dire le niveau du signal électrique de mesure mesuré en phase de calibration sous la première température de référence ici égale à 20°C), et 0,7 est le facteur de référence.

Le facteur de référence est égal à 0,7, ce qui signifie qu'en opération, pour le compteur 1, le niveau attendu du signal électrique de mesure à 74°C est égale à 0,7 fois le niveau à 20°C (premier niveau de référence).

Ainsi, en opération et pour déterminer si la température de l'eau est inférieure ou supérieure à 74°C, le composant de traitement 5 va comparer le niveau du signal électrique de mesure avec le seuil prédéfini égal ici à :

$$\mathrm{0,7.N(20°C).}$$

Le composant de traitement 5 déduit de cette comparaison si la température de l'eau est inférieure ou bien supérieure à 74°C : si le niveau du signal électrique de mesure est supérieur au seuil prédéfini, le composant de traitement en déduit que la température de l'eau est inférieure à 74°C, et si le niveau du signal électrique de mesure est inférieur au seuil prédéfini, le composant de traitement 5 en déduit que la température de l'eau est supérieure à 74°C.

Le composant de traitement 5 produit alors une estimation précise de la température de l'eau à partir de la vitesse du signal ultrasonore de mesure par lecture inverse de l'une des équations de la variation de la vitesse du son. Le composant de traitement 5 utilise une première formule issue de la première équation présentée plus tôt si la température de l'eau est inférieure à 74°C, et une deuxième formule issue de la deuxième équation si la température de l'eau est supérieure à 74°C.

On note que la première équation et la deuxième équation sont des approximations quadratiques d'une courbe (la courbe C2 de la figure 3) qui est une portion de courbe d'une fonction du cinquième degré. L'utilisation de formules issues de courbes du second degré est très avantageuse en matière de ressources de calcul requises dans le composant de traitement 5 pour mettre en œuvre l'invention.

Le composant de traitement 5 corrige alors la mesure du débit de l'eau en fonction de l'estimation de la température de l'eau.

Les principales étapes mises en œuvre pour évaluer la température de l'eau en opération sont rappelées sur la figure 8.

Le composant de traitement 5 mesure tout d'abord le niveau du signal électrique de mesure (étape E1).

Le composant de traitement 5 compare alors le niveau du signal électrique de mesure avec le seuil prédéfini, qui est égal au premier niveau de référence multiplié par le facteur de référence (étape E2).

Si le niveau du signal électrique de mesure est supérieur strictement au seuil prédéfini, le composant de traitement 5 en déduit que la température de l'eau est inférieure strictement à 74°C, et sélectionne la première formule (étape E3). Si le niveau mesuré du signal électrique de mesure est inférieur ou égal au seuil prédéfini, le composant de traitement 5 en déduit que la température de l'eau est supérieure ou égale à 74°C et sélectionne la deuxième formule (étape E4).

Le composant de traitement 5 calcule alors précisément la température de l'eau grâce à la formule sélectionnée (étape E5).

Le nombre de transducteurs dans le dispositif de mesure ultrasonique n'est pas nécessairement égal à deux. Il est par exemple possible de ne prévoir qu'un seul transducteur qui émet un signal ultrasonore de mesure qui est réfléchi par un élément réfléchissant intégré dans le conduit et qui est acquis par ledit transducteur. L'unique transducteur remplit successivement la fonction de transducteur émetteur et de transducteur récepteur pour le même signal ultrasonore de mesure.

On a décrit ici un mode de réalisation de l'invention dans lequel toutes les étapes du procédé de mesure sont mises en œuvre dans le composant de traitement du compteur. Cependant, le procédé de mesure pourrait être mis en œuvre dans plusieurs composants, voire éventuellement au moins partiellement à l'extérieur du compteur. Par exemple, l'estimation de la température de l'eau et la correction du débit pourraient être réalisées dans un autre compteur, dans un concentrateur de données, ou dans un serveur distant du compteur.

L'invention peut être mise en œuvre avec un compteur d'eau ou un compteur d'énergie thermique. L'eau peut être de l'eau douce ou de l'eau salée.

La température d'inflexion prise en compte n'est pas nécessairement égale précisément à 74°C, mais peut être égale à environ 74°C, et être par exemple comprise dans l'intervalle 74°C $\pm$ 2°C.

**Revendications**

1. Procédé de mesure de la température de l'eau, mis en œuvre au moins partiellement dans un compteur (1) et comprenant les étapes de :

   - faire émettre par un transducteur émetteur (3a) du compteur (1) un signal ultrasonore de mesure (8), puis acquérir un signal électrique de mesure (Sm) produit par un transducteur récepteur (3b) du compteur (1) lorsque celui-ci reçoit le signal ultrasonore de mesure après que le signal ultrasonore de mesure a parcouru un trajet de longueur définie (L) dans l'eau ; **caractérisé en ce que** le procédé comprend les étapes de:
   - mesurer une vitesse du signal ultrasonore de mesure dans l'eau ;
   - mesurer un niveau du signal électrique de mesure (Sm) ;
   - déterminer à partir du niveau du signal électrique de mesure si une température de l'eau est inférieure ou supérieure à une température d'inflexion correspondant à un point d'inflexion d'une courbe de la vitesse du son dans l'eau en fonction de la température de l'eau ;
   - estimer la température de l'eau à partir de la vitesse du signal ultrasonore de mesure en utilisant une première formule si la température de l'eau est inférieure à la température d'inflexion, ou une deuxième formule si la température de l'eau est supérieure à la température d'inflexion.

2. Procédé de mesure selon la revendication 1, comprenant l'étape, pour déterminer si la température de l'eau est inférieure ou supérieure à la température d'inflexion, de comparer le niveau du signal électrique de mesure (Sm) avec un seuil prédéfini égal à un premier niveau de référence du signal électrique de mesure multiplié par un facteur de référence, le premier niveau de référence ayant été préalablement mesuré au cours d'une phase de calibration du compteur (1) alors que la température de l'eau est égale à une première température de référence, et le facteur de référence correspondant à une évolution attendue du niveau du signal électrique de mesure résultant de la différence de température entre la première température de référence et la température d'inflexion.

3. Procédé de mesure selon la revendication 2, dans lequel le facteur de référence a été calculé préalablement à une mise en service du compteur (1) à partir d'au moins un deuxième niveau de référence du signal électrique de mesure mesuré alors que la température de l'eau est égale à une deuxième température de référence et un troisième niveau de référence du signal électrique de mesure mesuré alors que la température de l'eau est égale à une troisième température de référence.

4. Procédé de mesure selon la revendication 3, dans lequel le deuxième niveau de référence et le troisième niveau de référence ont été mesurés au cours de la phase de calibration dudit compteur (1), le facteur de référence étant alors propre audit compteur (1).

5. Procédé de mesure selon la revendication 3, dans lequel le deuxième niveau de référence et le troisième niveau de référence ont été mesurés pour une pluralité d'autres compteurs similaires audit compteur (1), le facteur de référence étant alors commun à plusieurs compteurs.

6. Procédé de mesure selon l'une des revendications précédentes, comprenant en outre les étapes d'estimer un débit de l'eau en utilisant la vitesse du signal ultrasonore de mesure, et de corriger le débit de l'eau en utilisant la température de l'eau estimée par le procédé de mesure.

7. Procédé de mesure selon l'une des revendications précédentes, dans lequel la première formule et la deuxième formule résultent respectivement d'une première équation et d'une deuxième équation de la vitesse du son dans l'eau en fonction de la température de l'eau, la première équation et la deuxième équation étant des équations du second degré.

8. Procédé de mesure selon la revendication 7, dans lequel la première équation est :

$$\text{Vs} = -0,0325.\text{T}^2 + 4,4218.\text{T} + 1403,9$$

et la deuxième équation est :

$$\text{Vs} = -0,0101.\text{T}^2 + 1,226.\text{T} + 1518,8,$$

où Vs est la vitesse du son dans l'eau et où T est la température de l'eau.

9. Procédé de mesure selon l'une des revendications précédentes, dans lequel le niveau du signal électrique de mesure est égal à une moyenne d'amplitudes d'une pluralité de lobes, lesdits lobes étant situés au milieu d'une portion (11) du signal électrique de mesure (Sm) dans laquelle ledit signal électrique de mesure présente une amplitude sensiblement constante.

10. Procédé de mesure selon l'une des revendications précédentes, dans lequel la température d'inflexion est comprise dans l'intervalle 74°C ± 2°C.

11. Compteur comprenant au moins un transducteur (3a, 3b) et un composant de traitement (5) agencé pour mettre en œuvre le procédé de mesure selon l'une des revendications précédentes.

12. Compteur selon la revendication 11, le compteur étant un compteur d'eau.

13. Compteur selon la revendication 11, le compteur étant un compteur d'énergie thermique.

14. Programme d'ordinateur comprenant des instructions qui conduisent le composant de traitement (5) du compteur (1) selon l'une des revendications 11 à 13 à exécuter les étapes du procédé de mesure selon l'une des revendications 1 à 10.

15. Support d'enregistrement lisible par ordinateur, sur lequel est enregistré le programme d'ordinateur selon la revendication 14.

**Patentansprüche**

1.  Verfahren zum Messen der Temperatur von Wasser, wobei das Verfahren zumindest teilweise in einem Zähler (1) durchgeführt wird und die Schritte umfasst:

    - Veranlassen, dass von einem Sendewandler (3a) des Zählers (1) ein Ultraschallmesssignal (8) gesendet wird, und dann Erfassen eines elektrischen Messsignals (Sm), das von einem Empfangswandler (3b) des Zählers (1) erzeugt wird, wenn dieser das Ultraschallmesssignal empfängt, nachdem das Ultraschallmesssignal einen Weg definierter Länge (L) in dem Wasser zurückgelegt hat, **dadurch gekennzeichnet, dass** das Verfahren die Schritte umfasst:
    - Messen einer Geschwindigkeit des Ultraschallmesssignals in dem Wasser;
    - Messen eines Pegels des elektrischen Messsignals (Sm);
    - Bestimmen anhand des Pegels des elektrischen Messsignals, ob eine Temperatur des Wassers niedriger oder höher als eine Wendepunkttemperatur ist, die einem Wendepunkt einer Kurve der Geschwindigkeit des Schalls im Wasser in Abhängigkeit von der Temperatur des Wassers entspricht;
    - Schätzen der Temperatur des Wassers anhand der Geschwindigkeit des Ultraschallmesssignals unter Verwendung einer ersten Formel, wenn die Temperatur des Wassers niedriger als die Wendepunkttemperatur ist, oder einer zweiten Formel, wenn die Temperatur des Wassers höher als die Wendepunkttemperatur ist.

2.  Verfahren zum Messen nach Anspruch 1, umfassend, zwecks Bestimmung, ob die Temperatur des Wassers niedriger oder höher als die Wendepunkttemperatur ist, den Schritt des Vergleichens des Pegels des elektrischen Messsignals (Sm) mit einem vordefinierten Schwellenwert, der gleich einem ersten Referenzpegel des elektrischen Messsignals ist, multipliziert mit einem Referenzfaktor, wobei der erste Referenzpegel zuvor während einer Kalibrierungsphase des Zählers (1) gemessen worden ist, während die Temperatur des Wasser gleich einer ersten Referenztemperatur ist, und wobei der Referenzfaktor einer erwarteten Entwicklung des Pegels des elektrischen Messsignals entspricht, die aus der Temperaturdifferenz zwischen der ersten Referenztemperatur und der Wendepunkttemperatur resultiert.

3.  Verfahren zum Messen nach Anspruch 2, bei dem der Referenzfaktor vor einer Inbetriebnahme des Zählers (1) anhand mindestens eines zweiten Referenzpegels des gemessenen elektrischen Messsignals berechnet worden ist, während die Temperatur des Wassers gleich einer zweiten Referenztemperatur ist, sowie eines dritten Referenzpegels des gemessenen elektrischen Messsignals, während die Temperatur des Wassers gleich einer dritten Referenztemperatur ist.

4.  Verfahren zum Messen nach Anspruch 3, bei dem der zweite Referenzpegel und der dritte Referenzpegel während der Kalibrierungsphase des genannten Zählers (1) gemessen worden sind, wobei der Referenzfaktor dann spezifisch für den genannten Zähler (1) ist.

5.  Verfahren zum Messen nach Anspruch 3, bei dem der zweite Referenzpegel und der dritte Referenzpegel für eine Vielzahl weiterer Zähler, die dem genannten Zähler (1) ähnlich sind, gemessen worden sind, wobei der Referenzfaktor dann mehreren Zählern gemeinsam ist.

6.  Verfahren zum Messen nach einem der vorhergehenden Ansprüche, ferner umfassend die Schritte des Schätzens einer Durchflussmenge des Wassers, indem die Geschwindigkeit des Ultraschallmesssignals verwendet wird, und des Korrigierens der Durchflussmenge des Wassers, indem die durch das Messverfahren geschätzte Temperatur des Wassers verwendet wird.

7.  Verfahren zum Messen nach einem der vorhergehenden Ansprüche, bei dem die erste Formel und die zweite Formel aus einer ersten Gleichung bzw. einer zweiten Gleichung der Geschwindigkeit des Schalls in Waser in Abhängigkeit von der Temperatur des Wassers resultieren, wobei die erste Gleichung und die zweite Gleichung Gleichungen des zweiten Grades sind.

8.  Verfahren zum Messen nach Anspruch 7, bei dem die erste Gleichung lautet:

$$Vs = -0,0325.T^2 + 4,4218.T + 1403,9$$

und die zweite Gleichung lautet:

$$Vs = -0,0101.T^2 + 1,226.T + 1518,8,$$

wobei Vs die Geschwindigkeit des Schalls im Wasser ist und wobei T die Temperatur des Wassers ist.

9.  Verfahren zum Messen nach einem der vorhergehenden Ansprüche, bei dem der Pegel des elektrischen Messsignals gleich einem Mittelwert der Amplituden einer Vielzahl von Keulen ist, wobei sich die genannten Keulen in der Mitte eines Abschnittes (11) des elektrischen Messsignals (Sm) befinden, in dem das genannte elektrische Messsignal eine im Wesentlichen konstante Amplitude aufweist.

10. Verfahren zum Messen nach einem der vorhergehenden Ansprüche, bei dem die Wendepunkttemperatur in dem Bereich 74°C $\pm$2°C liegt.

11. Zähler, umfassend mindestens einen Wandler (3a, 3b) und eine Verarbeitungskomponente (5), die ausgebildet ist, das Verfahren zum Messen nach einem der vorhergehenden Ansprüche durchzuführen.

12. Zähler nach Anspruch 11, wobei der Zähler ein Wasserzähler ist.

13. Zähler nach Anspruch 11, wobei der Zähler ein Wärmeenergiezähler ist.

14. Computerprogramm, umfassend Anweisungen, die die Verarbeitungskomponente (5) des Zählers (1) nach einem der Ansprüche 11 bis 13 veranlassen, die Schritte des Verfahrens zum Messen nach einem der Ansprüche 1 bis 10 auszuführen.

15. Computerlesbarer Aufzeichnungsträger, auf dem das Computerprogramm nach Anspruch 14 gespeichert ist.

**Claims**

1.  A measurement method for measuring the temperature of water, the method being performed at least in part in a meter (1) and comprising the steps of:

    ▪ causing an emitter transducer (3a) of the meter (1) to emit an ultrasonic measurement signal (8), and acquiring an electrical measurement signal (Sm) produced by a receiver transducer (3b) of the meter (1) when it receives the ultrasonic measurement signal after the ultrasonic measurement signal has travelled along a path of defined length (L) in the water; **characterized in that** the method comprises the steps of :

    ▪ measuring a speed of the ultrasonic measurement signal in the water;
    ▪ measuring a level of the electrical measurement signal (Sm);
    ▪ using the level of the electrical measurement signal to determine whether the temperature of the water is less than or greater than an inflection temperature corresponding to a point of inflection in a curve plotting the speed of sound in water as a function of the temperature of the water;
    ▪ estimating the temperature of the water from the speed of the ultrasonic measurement signal by using a first formula if the temperature of the water is less than the inflection temperature, and by using a second formula if the temperature of the water is greater than the inflection temperature.

2.  A measurement method according to claim 1, including, for determining whether the temperature of the water is less than or greater than the inflection temperature, the step of comparing the level of the electrical measurement signal (Sm) with a predefined threshold that is equal to a first reference level of the electrical measurement signal multiplied by a reference factor, the first reference level being previously measured during a stage of calibrating the meter (1) while the temperature of the water is equal to a first reference temperature, and the reference factor corresponding to the variation in the level of the electrical measurement signal that is to be expected from the temperature difference between the first reference temperature and the inflection temperature.

3. A measurement method according to claim 2, wherein prior to putting the meter (1) into service, the reference factor is calculated from at least one second reference level of the electrical measurement signal as measured while the temperature of the water is equal to a second reference temperature and from a third reference level of the electrical measurement signal as measured while the temperature of the water is equal to a third reference temperature.

4. A measurement method according to claim 3, wherein the second reference level and the third reference level are measured during the stage of calibrating said meter (1), the reference factor then being specific to said meter (1) .

5. A measurement method according to claim 3, wherein the second reference level and the third reference level are measured for a plurality of other meters similar to said meter (1), and the reference factor is then common to a plurality of meters.

6. A measurement method according to any preceding claim, further comprising the steps of estimating a flow rate for the water by using the speed of the ultrasonic measurement signal, and of correcting the flow rate of the water by using the temperature of the water as estimated by the measurement method.

7. A measurement method according to any preceding claim, wherein the first formula and the second formula result respectively from a first equation and from a second equation for the speed of sound in water as a function of the temperature of the water, the first equation and the second equation being equations of the second degree.

8. A measurement method according to claim 7, wherein the first equation is:

$$Vs = -0.0325 \times T^2 + 4.4218 \times T + 1403.9$$

and the second equation is:

$$Vs = -0.0101 \times T^2 + 1.226 \times T + 1518.8,$$

where Vs is the speed of sound in water and where T is the temperature of the water.

9. A measurement method according to any preceding claim, wherein the level of the electrical measurement signal is equal to the mean of the amplitudes of a plurality of lobes, said lobes being situated in the middle of a portion (11) of the electrical measurement signal (Sm) in which said electrical measurement signal presents an amplitude that is substantially constant.

10. A measurement method according to any preceding claim, wherein the inflection temperature lies in the range 74°C $\pm$ 2°C.

11. A meter including at least one transducer (3a, 3b) and a processor component (5) arranged to perform the measurement method according to any preceding claim.

12. A meter according to claim 11, the meter being a water meter.

13. A meter according to claim 11, the meter being a thermal energy meter.

14. A computer program including instructions that cause the processor component (5) of the meter (1) according to any one of claims 11 to 13 to execute the steps of the measurement method according to any one of claims 1 to 10.

15. A computer-readable storage medium storing the computer program according to claim 14.

Fig. 1

Fig. 2

Fig. 3

Fig. 4

Fig. 5

Fig. 6

Fig. 7

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019002145 A1
- WO 2020100157 A1
- US 2003029242 A1